(19) Europäisches Patentamt
European Patent Office
Office européen des brevets

(11) **EP 3 062 176 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(51) Int Cl.:
**G05B 13/04** *(2006.01)* **G05B 13/02** *(2006.01)*
**F02D 41/00** *(2006.01)* **F02D 41/14** *(2006.01)*
**F02D 41/26** *(2006.01)*

(21) Anmeldenummer: **16156713.6**

(22) Anmeldetag: **22.02.2016**

(54) **VERFAHREN ZUM REGELN EINER REGELSTRECKE, VORRICHTUNG ZUR ERZEUGUNG VON REGLERPARAMETERN UND STEUERGERÄT**

METHOD FOR ADJUSTING A CONTROL LOOP, DEVICE FOR GENERATING CONTROL PARAMETERS AND CONTROL DEVICE

PROCÉDÉ DE RÉGLAGE D'UN SYSTÈME ASSERVI, DISPOSITIF DE GÉNÉRATION DE PARAMÈTRES DE RÉGLAGE ET APPAREIL DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2015 DE 102015203210**

(43) Veröffentlichungstag der Anmeldung:
**31.08.2016 Patentblatt 2016/35**

(73) Patentinhaber: **Volkswagen AG**
**38440 Wolfsburg (DE)**

(72) Erfinder:
• **Hübner, Matthias**
**38104 Braunschweig (DE)**
• **Mannigel, Dieter**
**38116 Braunschweig (DE)**
• **Gebauer, Stefan**
**38440 Wolfsburg (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
EP-A2- 1 426 594 DE-A1- 10 238 573
DE-A1-102008 001 081 DE-A1-102008 043 315
DE-A1-102010 028 266 DE-T5-112007 000 998

• **KRISTJAN AZMAN ET AL: "Fixed-structure Gaussian process model", INTERNATIONAL JOURNAL OF SYSTEMS SCIENCE, Bd. 40, Nr. 12, 1. Dezember 2009 (2009-12-01), Seiten 1253-1262, XP055337786, GB ISSN: 0020-7721, DOI: 10.1080/00207720903038028**
• **JUSS KOCIJAN ET AL: "Application of Varying Parameters Modelling with Gaussian Processes", PROCEEDINGS OF THE 17TH WORLD CONGRESS THE INTERNATIONAL FEDERATION OF AUTOMATIC CONTROL; SEOUL, KOREA; JULY 6-11, 2008., Bd. 42, Nr. 19, 1. Januar 2009 (2009-01-01), Seiten 92-97, XP055337841, Red Hook, NY ISSN: 1474-6670, DOI: 10.3182/20090921-3-TR-3005.00018 ISBN: 978-1-123-47890-7**

**Beschreibung**

Die Erfindung betrifft ein Verfahren zum Regeln einer Regelstrecke, eine Vorrichtung zur Erzeugung von Reglerparametern und ein Steuergerät. Die Erfindung betrifft insbesondere eine Regelung mit einem Gauß-Prozess-Modell zur Bestimmung der Reglerparameter.

Bei Mehrgrößenreglern sind lokal lineare Modelle nur in definierten Bereichen des Zustandsraums gültig. Für jedes der lokal linearen Modelle wird ein dort gültiger Regler entworfen, der über ein bestimmtes Parameterset verfügt. Die Werte der Reglerparameter für die entworfenen Regler sind bezüglich der Bereiche des Zustandsraums variant und müssen in Abhängigkeit von Größen der Regelstrecke variiert werden (Scheduling), um eine definierte Güte (Performance, Stabilität, Robustheit) des geschlossenes Regelkreises zu gewährleisten.

Das Scheduling von Reglerparametern (zum Beispiel bei PID-Reglern) erfolgt derzeit mittels Kennfeldmodellen in Abhängigkeit von (zumeist mehreren) Größen der betreffenden Regelstrecke (zum Beispiel Last und Drehzahl) oder in Abhängigkeit von Sollgrößen des betrachteten Regelkreises.

Die Parametrierung der Kennfelder für Reglerparameter mit mehr als zwei Eingangsgrößen ist manuell nur mit großem Aufwand durchführbar. Zudem ergeben sich Probleme hinsichtlich der Glattheit des Kennfeldverlaufs. Ziel ist es, stetige und stetig differenzierbare Abhängigkeiten zu modellieren, um numerische Probleme zu verhindern.

Dies kann mit den derzeitigen Implementierungen nicht sichergestellt werden. Dies führt zu Einschränkungen in der Regelgüte. Nachteilig ist auch der derzeit hohe Speicherbedarf bedingt durch eine hohe Stützstellenanzahl.

DE 2010 028 266 A1 offenbart ein Steuergerät und ein Verfahren zur Berechnung einer Ausgangsgröße für eine Steuerung und ist darauf gerichtet, Größen in Fahrzeugsteuergeräten zu bestimmen, die nicht oder nur sehr aufwendig gemessen werden können. Dazu werden die Ausgangsgrößen unter Verwendung einer Bayes'schen Regression berechnet.

Ferner werden die Druckschriften US 2007 0 276 512 A1 und US 2005 0 193 739 A1 als Stand der Technik angesehen.

Zudem wird als weiterer Stand der Technik auf die Druckschriften DE 102 38 573 A1, K. AZMAN et al., "Fixed-structure Gaussian process model", International Journal of Systems Science, Bd. 40, Nr. 12, Seiten 1253-1262 vom 01. Dezember 2009, [XP 055 337 786] sowie die Druckschriften EP 1 426 594 A2, DE 11 2007 000 998 T5, DE 10 2008 001 081 A1, DE 10 2010 028 266 A1 und DE 10 2008 043 315 A1 verwiesen.

Der Erfindung liegt die Aufgabe zugrunde, insbesondere mehrdimensionale Reglerparameter einfach und mit verbesserter Güte zu erzeugen.

Die Erfindung weist unabhängig von einem bestimmten Anwendungsfall folgende Merkmale auf:
Die erfindungsgemäße Vorrichtung ist eingerichtet zur Erzeugung von Reglerparametern für einen Regler, dessen Reglerparameter in Abhängigkeit von Größen einer Regelstrecke variieren. Erfindungsgemäß ist vorgesehen, dass die Vorrichtung mindestens ein Gauß-Prozess-Modell eingerichtet zur Bestimmung der Reglerparameter in Abhängigkeit der Größen der Regelstrecke aufweist.

Das oder die Gauß-Prozess-Modelle sind Modelle von Reglerparametern und werden verwendet, um Reglerparameter (beziehungsweise Parameter eines Beobachters) in Abhängigkeit von beliebigen, unter anderem aber nicht ausschließlich physikalischen Größen zu beschreiben beziehungsweise zu generieren.

Ein Gaußprozess ist in der Wahrscheinlichkeitstheorie ein stochastischer Prozess, bei dem jede endliche Teilmenge von Zufallsvariablen mehrdimensional normalverteilt (gaußverteilt) ist. Während die mehrdimensionale Gaußverteilung eine Gaußverteilung von Vektoren darstellt, beschreibt ein Gaußprozess die Gaußverteilung eines Kontinuums von Zufallsvariablen und insbesondere eine Gaußverteilung von Funktionen.

Gauß-Prozess-Modelle sind inhärent stetig und stetig differenzierbar, sodass sich glatte Kennfeldverläufe der Regler- beziehungsweise Beobachterparameter ergeben. Die Modellierung von mehrdimensionalen Zusammenhängen ist inhärent möglich und unproblematisch. Mittels Gauß-Prozessen lässt sich der benötigte Speicherplatz im Vergleich zu kennfeldbasierten Lösungen reduzieren. Verbunden mit einem inhärent glatten Interpolationsverhalten, sowie einem physikalisch sinnvollen Extrapolationsverhalten ermöglichen Gauß-Prozess-Modelle eine deutliche Verbesserung der Adaption der Regelung oder des verwendeten Zustandsschätzers hinsichtlich numerischer Stabilität, Rechenzeit, Speicheraufwand. Der Applikationsaufwand beziehungsweise der Aufwand zur manuellen Parametrierung wird deutlich reduziert.

Ein Gauß-Prozess-Modell kann für einen Reglerparameter des Reglers vorgesehen sein. Somit kann für jede Größe eines Mehrgrößenreglers ein Gauß-Prozess-Modell zur Erzeugung eines Reglerparameters beziehungsweise eines Werts eines Reglerparametervektors vorgesehen sein.

Das erfindungsgemäße Steuergerät eingerichtet zum Einsatz in einem Fahrzeug, welches einen Regler, dessen Reglerparameter in Abhängigkeit von Größen einer Regelstrecke variieren, und eine Vorrichtung eingerichtet zur Erzeugung von Reglerparametern für den Regler umfasst, beinhaltet, dass das Steuergerät mindestens ein Gauß-Prozess-Modell eingerichtet zur Bestimmung der Reglerparameter in Abhängigkeit der Größen der Regelstrecke aufweist. Es gelten die gleichen Vorteile und Modifikationen wie zuvor beschrieben. Die Erzeugung von Reglerparametern mittels eines Gauß-Prozess-Modells ist insbesondere für komplexe und zeitkritische Regelungsprozesse in Fahrzeugen wie zum Beispiel die Motorsteuerung oder Abgasregelung prädestiniert.

Ein Beobachter ist zur Schätzung von Zustandsgrößen der Regelstrecke vorgesehen, und die geschätzten Zustandsgrößen können zu dem Regler zurückgeführt werden, wobei der Beobachter mindestens ein Gauß-Prozess-Modell eingerichtet zur Modellierung von Verstärkungsfaktoren aufweist. Bei dem oder den Gauß-Prozess-Modellen des Beobachters kommen andere Gauß-Prozess-Modelle als bei der Regelung zum Einsatz, da anstelle der Reglerparameter die Verstärkung ermittelt wird, die zur Zustandsschätzung verwendet wird. Die Gauß-Prozess-Modelle von Beobachter und Regler können mit der gleichen Methodik erstellt werden, da zumindest für lineare Systeme eine äquivalente Zustandsraumdarstellung des Beobachters möglich ist. Auch bei der Rückführung der Zustandsgrößen kann vorteilhaft auf ein oder mehrere Gauß-Prozess-Modelle zurückgegriffen werden.

Ein Modellanteil des Reglers kann als Gauß-Prozess-Modell ausgebildet sein. Hier wird das Scheduling, das heißt die Bestimmung oder Variation der Reglerparameter in Abhängigkeit von Größen der Regelstrecke, und die eigentliche Reglerstruktur in einer Einheit kombiniert. Dies kann positive Synergieeffekte haben.

Das Steuergerät kann eine Logikschaltung aufweisen, welche eingerichtet ist, zumindest einen Teil eines Gauß-Prozess-Modells auszuführen. So können Gauß-Prozess-Modelle online, das heißt während des Betriebs, in Hardware berechnet werden, was den Prozessorkern entlastet und die Zykluszeiten reduziert.

Das erfindungsgemäße Verfahren zum Regeln einer Regelstrecke mit einem Regler, dessen Reglerparameter in Abhängigkeit von Größen einer Regelstrecke variieren, ist dadurch gekennzeichnet, dass zur Bestimmung der Reglerparameter in Abhängigkeit der Größen der Regelstrecke mindestens ein Gauß-Prozess-Modell verwendet wird. Es gelten die gleichen Vorteile und Modifikationen wie zuvor beschrieben.

Mittels mehrerer Gauß-Prozess-Modelle können mehrdimensionale Zusammenhänge der Regelstrecke modelliert werden. Dies ermöglicht eine parallele Verarbeitung mehrdimensionaler Parameter.

Mindestens ein Gauß-Prozess-Modell wird vor einem Betrieb rechnergestützt mit Daten versehen. Die Bedatung der Modelle erfolgt offline mittels Computer-Tools, sodass eine manuelle Bedatung nicht notwendig ist.

Die Regelstrecke kann eine Ladedruckregelung oder eine Ladedruckregelung und eine Abgasrückführung eines Verbrennungsmotors (Verbrennungskraftmaschine) eines Fahrzeugs umfassen.

Diese mehrdimensionale Anwendung miteinander gekoppelter Bestandteile, wie zum Beispiel der Ladedruckregelung oder der Ladedruckregelung und einer Abgasrückführungsregelung, sind sehr zuverlässig mit dem Steuergerät zu regeln.

Die Erfindung weist bezogen auf einen bestimmten Anwendungsfall, insbesondere der bereits genannte Ladedruckregelung eines Turboladers mit variabler Turbinengeometrie (erste Ausführungsvariante) oder die ebenfalls bereits genannte Ladedruckregelung des Turboladers mit variabler Turbinengeometrie und mindestens einer Abgasrückführungsregelung (zweite Ausführungsvariante) einer Abgasrückführung (Hochdruck-Abgasrückführung und/oder Niederdruck-AGR) folgende Merkmale auf:

Ausgangspunkt der Erfindung ist ein Verfahren zur Ladedruckregelung eines Turboladers mit variabler Turbinengeometrie einer Verbrennungskraftmaschine, dessen Reglerparameter beim Regeln einer Regelstrecke mit einem Regler in Abhängigkeit von Größen der Regelstrecke variieren.

Erfindungsgemäß ist vorgesehen, dass zur Bestimmung der Reglerparameter in Abhängigkeit der Größen der Regelstrecke Gauss-Prozess-Modelle in einer dafür eingerichteten Vorrichtung zur Bestimmung der Reglerparameter verwendet werden, wobei die bestimmten Reglerparameter die Ausgänge der Gauß-Prozess-Modelle sind, wobei in Abhängigkeit von auf die Regelstrecke wirkenden Stellgrößen mittels eines Beobachters in die Regelstrecke einfließende Zustandsgrößen geschätzt oder gemessen werden, die zu dem Regler zurückgeführt werden, wobei der Beobachter innerhalb eines Schätzverstärkers ebenfalls über Gauss-Prozess-Modelle Verstärkungsfaktoren modelliert, wobei der Beobachter zur Schätzung der Zustandsgrößen der Regelstrecke ein Modell enthält, welches die Zustandsgrößen sowie modellierte Messgrößen an den Regler ausgibt, wobei verfügbare Messgrößen der Regelstrecke von den modellierten Messgrößen des Modells subtrahiert werden, wonach dem Schätzverstärker im Ergebnis ein Messfehler oder ein Fehlersignal zugeführt wird, wobei die mehreren Gauss-Prozess-Modelle des Schätzverstärkers Verstärkungsfaktoren und Stellgrößen des Beobachters erzeugen, so dass eine vollständige Rückführung der Zustandsgrößen der Regelstrecke durch den Beobachter durchgeführt wird, wobei die Verstärkungsfaktoren innerhalb des Schätzverstärkers in der Struktur des Beobachters zur Konvergenz eines Schätzfehlers über die Generierung eines zusätzlichen Stellanteils führen.

Bevorzugt ist vorgesehen, dass die Ladedruckregelung des Turboladers mit variabler Turbinengeometrie (erste Ausführungsvariante) gleichzeitig mit der Regelung mindestens einer Abgasrückführungsrate (zweite Ausführungsvariante) einer Abgasrückführung (Hochdruck-Abgasrückführung und/oder Niederdruck-AGR) der Verbrennungskraftmaschine vorgenommen wird, deren Reglerparameter beim Regeln der Regelstrecke mit dem Regler in Abhängigkeit von Größen der Regelstrecke variieren.

Bei der Ladedruckregelung des Turboladers mit variabler Turbinengeometrie (erste Ausführungsvariante) oder bei Ladedruckregelung des Turboladers mit variabler Turbinengeometrie und gleichzeitiger Regelung mindestens einer Abgasrückführungsrate (zweite Ausführungsvariante) einer Abgasrückführung (Hochdruck-Abgasrückführung und/oder Niederdruck-AGR) ist in Ausgestaltung der Erfindung vorgesehen, dass in Abhängigkeit von auf die Regelstrecke wirkenden Stellgrößen mittels eines Beobachters in die Regelstrecke einfließende Zustandsgrößen geschätzt oder gemessen werden, die zu dem Regler zurückgeführt werden, wobei der Beobachter über mindestens ein Gauss-Prozess-Modell Verstärkungsfaktoren modelliert.

In beiden Ausführungsvarianten ist vorgesehen, dass in Abhängigkeit von auf die Regelstrecke wirkenden Stellgrößen mittels des Beobachters in die Regelstrecke einfließende Zustandsgrößen geschätzt oder gemessen werden, die zu dem Regler zurückgeführt werden, wobei der Beobachter über mindesten ein Gauss-Prozess-Modell Verstärkungsfaktoren modelliert.

Gemäß der ersten Ausführungsvariante ist vorgesehen, dass zur Ladedruckregelung des Turboladers als Zustandsgröße/n, die dem Regler zugeführt wird/werden und die auf die Regelstrecke wirkt/wirken, ein Druck vor dem Turbolader, eine Turboladerdrehzahl des Turboladers, ein Druck nach dem Turbolader, ein Druck vor der Turbine mit variabler Turbinengeometrie, ein Druck nach der Turbine mit variabler Turbinengeometrie verwendet wird/werden.

Gemäß der zweiten Ausführungsvariante ist vorgesehen, dass zur Ladedruckregelung des Turboladers und zur Regelung der Abgasrückführungsrate als Zustandsgröße/n, die dem Regler zugeführt wird/werden und die auf die Regelstrecke wirkt/wirken, ein Druck vor dem Turbolader zur Ladedruckregelung und zur Niederdruck-AGR-Regelung, zur Ladedruckregelung eine Turboladerdrehzahl des Turboladers, zur Ladedruckregelung und Hochdruck-Abgasrückführungs-Regelung ein Druck nach dem Turbolader, zur Ladedruckregelung und Hochdruck-Abgasrückführungs-Regelung ein Druck vor der Turbine mit variabler Turbinengeometrie, zur Ladedruckregelung und zur Niederdruck-AGR-Regelung ein Druck nach der Turbine mit variabler Turbinengeometrie verwendet wird/werden.

Gemäß der der ersten und der zweiten Ausführungsvariante ist vorgesehen, dass zur Ladedruckregelung des Turboladers als Stellgröße, die dem Regler zurückgeführt wird und die auf die Regelstrecke wirkt, eine Verstellposition der Turbine mit variabler Turbinengeometrie verwendet wird.

Gemäß der zweiten Ausführungsvariante ist vorgesehen, dass zur Regelung der Abgasrückführungsrate als Stellgröße/n, die dem Regler zurückgeführt wird/werden und die auf die Regelstrecke wirkt/wirken, je nachdem welche/s Abgasrückführungssystem/e allein oder in Kombination zum Einsatz kommt/kommen, eine Ventilposition eines Ventils in einer Abgas-Rückführungsleitung der Hochdruck-Abgasrückführung (Hochdruck-AGR), eine Ventilposition eines Ventils in der Abgas-Rückführungsleitung der Niederdruck Abgasrückführung (Niederdruck-AGR) verwendet wird/werden.

Für beide Ausführungsvarianten gilt, dass Regelgrößen aus der Regelstrecke ausgegeben und im Regelkreis zurückgeführt werden, wobei die Regelgrößen von Sollgrößen oder Führungsgrößen subtrahiert werden, wodurch sich eine Regelabweichung ergibt, welche dem Regler zugeführt wird.

Ferner gilt für beide Ausführungsvarianten, dass die Vorrichtung Reglerparameter für den Regler bestimmt, indem der Vorrichtung aus der Regelstrecke Regelgrößen zugeführt werden, wobei mindestens eine der Größen der Regelstrecke der Vorrichtung als Scheduling-Größe zugeführt wird.

Dabei ist vorgesehen, dass die Vorrichtung mehrere Gauss-Prozess-Modelle zur Bestimmung der Reglerparameter in Abhängigkeit der mindestens einen Scheduling-Größe der Regelstrecke umfasst, so dass mittels der mehreren Gauss-Prozess-Modelle mehrdimensionale Zusammenhänge der Regelstrecke modelliert werden können.

Außerdem ist bevorzugt vorgesehen, dass die Vorrichtung während des Betriebs der Regelstrecke, in jedem Rechenschritt die Reglerparameter in Abhängigkeit von der mindestens einen zugeführten Scheduling-Größe online bestimmt.

Bezüglich des Beobachters ist vorgesehen, dass der Beobachter zur Schätzung der Zustandsgrößen der Regelstrecke ein Modell enthält, welches die Zustandsgrößen und modellierte Messgrößen an den Regler ausgibt, wobei verfügbare Messgrößen der Regelstrecke von den modellierten Messgrößen des Modells subtrahiert werden, wonach im Ergebnis einem Schätzverstärker ein Messfehler oder ein Fehlersignal zugeführt wird.

Der Schätzverstärker weist analog zu der Vorrichtung mehrere Gauss-Prozess-Modelle auf, welche Verstärkungsfaktoren beziehungsweise Stellgrößen des Beobachters erzeugen, so dass eine vollständige Rückführung der Zustandsgrößen der Regelstrecke durch den Beobachter durchgeführt wird, wozu die Verstärkungsfaktoren, die zur Konvergenz des Schätzfehlers über die Generierung eines zusätzlichen Stellanteils in der Struktur des Beobachters führen, wiederum als Gauss-Prozessor modelliert werden.

Das Verfahren zeichnet sich bei beiden Ausführungsvarianten bevorzugt dadurch aus, dass mindestens ein Modellanteil oder mehrere Modellanteile des Reglers als Gauss-Prozess-Modell ausgeführt ist/sind, wobei das Scheduling als Element oder Funktionsanteil innerhalb des Reglers realisiert werden, so dass das Scheduling und die Reglerstruktur zusammengeführt sind, wobei der mindestens eine Modellanteil oder die mehreren Modellanteile des Reglers Kanäle des Reglers sind, die zu einer oder mehreren Größe/n eines Mehrgrößenreglers korrespondieren.

Über Modellierung der Gauss-Prozess-Modelle werden bei beiden Ausführungsvarianten bevorzugt Wahrscheinlichkeitswerte ermittelt, die in besonders vorteilhafter Weise des Verfahrens eine Aussage über Güte der ermittelten Reglerparameter liefern, wobei diese Wahrscheinlichkeitswerte innerhalb der Reglerstruktur direkt verwendet werden, um bei einer geringen Modellierungsgüte ein konservativeres, insbesondere stärker gedämpftes Verhalten der geregelten Regelstrecke zu erzeugen, wozu die ermittelten Reglerparameter in Abhängigkeit der Wahrscheinlichkeitswerte in einer eigenen Funktionalität des Reglers variiert werden, so dass die Dämpfung des nominellen geregelten Systems erhöht wird.

Die Erfindung betrifft ein Steuergerät, insbesondere ein Motorsteuergerät zum Einsatz in einem Fahrzeug, eingerichtet das erfindungsgemäße Verfahren durchzuführen.

Das Steuergerät ist insbesondere dadurch gekennzeichnet, dass ein Beobachter zur Schätzung von Zustandsgrößen der Regelstrecke vorgesehen ist, und dass die geschätzten Zustandsgrößen dem Regler zugeführt werden, wobei der Beobachter mindestens ein Gauss-Prozess-Modell aufweist, welches zur Modellierung von Verstärkungsfaktoren eingerichtet ist. Im Steuergerät ist mindestens ein Modellanteil des Reglers als Gauss-Prozess-Modell ausgebildet.

Das Steuergerät umfasst die Regelstrecke einer Ladedruckregelung eines Turboladers mit variabler Turbinengeometrie gemäß der ersten Ausführungsvariante oder eine Ladedruckregelung eines Turboladers mit variabler Turbinengeometrie und gleichzeitiger Regelung einer Abgasrückführungsrate mindestens einer Abgasrückführung (Hochdruck-Abgasrückführung und/oder Niederdruck-Abgasrückführung) der Verbrennungskraftmaschine gemäß der zweiten Ausführungsvariante.

Die Erfindung wird nachfolgend anhand der zugehörigen Zeichnungen erläutert. Es zeigen:

Figur 1      ein Anwendungsbeispiel eines Verfahrens zur Ladedruckregelung eines Turboladers mit variabler Turbinengeometrie und gleichzeitiger Regelung einer Abgasrückführungsrate einer Abgasrückführung einer Verbrennungskraftmaschine gemäß der zweiten Ausführungsvariante;
Figur 2      eine beispielhafte Darstellung eines Regelkreises;
Figur 3      ein erstes Ausführungsbeispiel eines Regelkreises;
Figur 4      ein zweites Ausführungsbeispiel eines Regelkreises.

Im Folgenden wird zunächst ein für verschiedene Anwendungen einsetzbares Verfahren zur Auswahl von Scheduling Variablen und zum Design von Kennfeldern einer Reglerrückführmatrix beschrieben, was als Grundlage der Erfindung angesehen werden kann.

Es werden die folgenden Annahmen getroffen. Gegeben sei das dynamische System

$$\dot{x} = f(x, u) \tag{0}$$

mit x: Zustandsvektor und u: Stellvektor.

Bekannt sind zum Beispiel aus Messungen die Ruhelagen $x_{AP}$, wobei AP einen Arbeitspunkt kennzeichnet. Dem zugeordnet ist ein Stellvektor im Arbeitspunkt $u_{AP}$. Es wird des Weiteren angenommen, dass das System steuerbar ist und durch eine Zustandsrückführung $u = f_r(x)$, die den Stellvektor als Funktion des Zustandsvektors beschreibt, geregelt werden kann.

Dann kann u als Erweiterung des Zustandsvektors aufgefasst werden. Es ergibt sich das erweiterte System durch zeitliche Ableitung von u(x) zu:

$$\dot{x} = f(x, u)$$

$$\dot{u} = \frac{\partial f_r}{\partial x} \cdot \dot{x} = \frac{\partial f_r}{\partial x} \cdot f(x, u)$$

Es kann festgestellt werden, dass der Gradient der Funktion $u = f_r(x)$ mitbestimmend ist für die Systemdynamik des geregelten Systems.

Eine Linearisierung in einem Arbeitspunkt AP ergibt dann:

$$\begin{bmatrix} \Delta \dot{x} \\ \Delta \dot{u} \end{bmatrix} = \begin{bmatrix} \frac{\partial f}{\partial x} & \frac{\partial f}{\partial u} \\ \frac{\partial f_r}{\partial x} \cdot \frac{\partial f}{\partial x} & \frac{\partial f_r}{\partial x} \cdot \frac{\partial f}{\partial u} \end{bmatrix}_{AP} \cdot \begin{bmatrix} \Delta x \\ \Delta u \end{bmatrix} \tag{1}$$

Ziel ist es, eine geeignete Funktion $u = f_r(x)$ zu finden. Hier wird dafür das System in seinen Arbeitspunkten betrachtet. Für jeden Arbeitspunkt wird ein lokal linear gültiges Reglergesetz (welches die Abweichungen vom Arbeitspunkt berücksichtigt) mittels LQR-Verfahren bestimmt, das dann in ein kontinuierlich gültiges (im Sinne von $u = f_r(x)$) überführt wird.

Als Anforderungen für diese Überführung gelten, dass die lokal spezifizierte Dynamik durch die Überführung nicht verändert werden soll (lokale Stabilitäts- und Dämpfungserhaltung) und dass das globale Verhalten des nichtlinearen Systems aus Gleichung (0), das durch $u = f_r(x)$ erzeugt wird, ebenfalls dem spezifizierten Gütemaß genügen soll. Hierdurch soll das bezüglich des Gütemaßes optimale Verhalten und gleichzeitig die Stabilität und Dämpfung bei Übergängen zwischen Arbeitspunkten sichergestellt werden (globale Optimalitätserhaltung).

Zunächst wird ein Verfahren zur Linearisierung und Ermittlung lokal linearer Regler beschrieben. Es wird für jeden AP des Systems aus Gleichung (0) ein lokal lineares Modell erzeugt, das die Dynamik der Abweichungen vom Arbeitspunkt $\Delta x = x_{AP} - x$ charakterisiert.

$$\Delta \dot{x} = \frac{\partial f}{\partial x}\bigg|_{AP} \cdot \Delta x + \frac{\partial f}{\partial u}\bigg|_{AP} \cdot \Delta u$$

Das Reglergesetz lautet

$$\Delta u = \widetilde{R}_{AP} \cdot \Delta x$$

mit der Matrix $\widetilde{R}_{AP}$ der Reglerparameter p, die mittels linear quadratischer Optimierung unter Minimierung des Gütemaßes $J = \frac{1}{2}\,\Delta u^T R \Delta u + \frac{1}{2}\,\Delta x^T Q \Delta x$ mit den Gewichtungsmatrizen R und Q bestimmt wird. Standard-Verfahren über Lösung der Matrix-Ricatti-Gleichung.

Das Verhalten des geregelten Systems im Arbeitspunkt ist dann

$$\Delta \dot{x} = \left(\frac{\partial f}{\partial x}\bigg|_{AP} + \frac{\partial f}{\partial u}\bigg|_{AP} \cdot \widetilde{R}_{AP}\right) \cdot \Delta x \qquad (2)$$

Die Regelung und das lokal lineare Modell haben nur eine Gültigkeit in einem gewissen Einzugsbereich des Zustandsraums um den Arbeitspunkt.

Nun wird die Kombination mit einer Vorsteuerung und Interpolation beschrieben.

Zur Vorsteuerung wird das Folgende festgestellt. Um das System in einem Arbeitspunkt betreiben zu können, ist ein Stellanteil notwendig, der es im Arbeitspunkt hält, sofern die Abweichung $\Delta x$ vom AP zu null wird, da dann der korrigierende Stellanteil $\Delta u$ ebenfalls zu null wird. Daher ist es sinnvoll, letzteren Stellanteil mit einem eigenen, den Arbeitspunkt charakterisierenden Stellanteil zu addieren. Dieser wird Vorsteuerung $u_{AP}$ genannt. Dieser Stellanteil sei wiederum abhängig vom Zustandsvektor: Je nachdem, wo im Zustandsraum sich das System befindet, werden ein geeigneter Arbeitspunkt $x_{AP} = f_{AP}(x)$ und eine damit verbundene geeignete Vorsteuerung $u_{AP}(x_{AP})$ gewählt, wobei $f_{AP}(x)$ eine Arbeitspunktauswahl beschreibt, welche eine Abbildung vom Ist-Zustand auf die Menge der Arbeitspunkte darstellt. Die Stellgröße ist dann:

$$u = u_{AP} + \Delta u = u_{AP}(x_{AP}) + \widetilde{R}_{AP} \cdot (x_{AP} - x)$$

Zur Interpolation wird das Folgende festgestellt. Jede Reglermatrix $\widetilde{R}_{AP}$ ist ausschließlich in einem Einzugsgebiet um eine Ruhelage (Arbeitspunkt) AP gültig. Abhängig vom Ist-Zustand $x$ des Systems, ist nun eine geeignete Reglermatrix $\widetilde{R}(x)$ definiert, die eng mit $\widetilde{R}_{AP}$ assoziiert ist. Hierdurch wird das Reglergesetz zu

$$u = f_r(x) = u_{AP}(x_{AP}) + \widetilde{R}(x) \cdot (x_{AP} - x) = u_{AP}(x) + \widetilde{R}(x) \cdot (f_{AP}(x) - x) \qquad (3)$$

Die Funktionen $\widetilde{R}(x) = (\widetilde{r}_{ij}(x))$ - mit (i, j) als Position des Matrixelements - können nun als Gauss-Prozess modelliert werden, sodass die Funktion hinreichend oft differenzierbar ist.

Lokale Stabilitäts- und Dämpfungserhaltung: Damit lokal um die betrachteten Arbeitspunkte die durch Gleichung (2) spezifizierte Dynamik mittels des Reglergesetzes aus Gleichung (3) erhalten bleibt, ist es notwendig, die lokale Identität der Dynamikmatrizen aus Gleichungen (1) und (3) bezüglich der Dynamik in $x$ herbeizuführen. Das bedeutet:

$$\Delta u = \widetilde{R}_{AP} \cdot \Delta x \qquad (4)$$

Linearisiert man $u = f_r(x)$ unter der Voraussetzung kleiner Änderungen um den Arbeitspunkt, ergibt sich die Änderung der Stellgröße im AP unter Berücksichtigung des dann anzuwendenden Reglergesetzes aus Gleichung (3) zu:

$$\Delta u = \frac{\partial f_r}{\partial x} \cdot \Delta x = \left( \frac{\partial u_{AP}}{\partial x} + \frac{\partial \tilde{R}(x)}{\partial x} \cdot (f_{AP}(x) - x) + \tilde{R}(x) \cdot \left( \frac{\partial f_{AP}}{\partial x} - 1 \right) \right) \cdot \Delta x \qquad (5)$$

Sofern $f_{AP}(x)$ eine diskrete Funktion ist, erscheint als partielles Differenzial nach $x$ dessen Delta-Impuls als Distribution in Gleichung (5).

Dann gilt wegen der Äquivalenz in Gleichung (4)

$$\tilde{R}_{AP} = \left( \frac{\partial u_{AP}}{\partial x} + \frac{\partial \tilde{R}(x)}{\partial x} \cdot (f_{AP}(x) - x) + \tilde{R}(x) \cdot \left( \frac{\partial f_{AP}}{\partial x} - 1 \right) \right)$$

$$\leftrightarrow \frac{\partial \tilde{R}(x)}{\partial x} \cdot (f_{AP}(x) - x) + \tilde{R}(x) \cdot \left( \frac{\partial f_{AP}}{\partial x} - 1 \right) = \tilde{R}_{AP} - \frac{\partial u_{AP}}{\partial x} \quad \forall \, AP$$

Gleichung 6 definiert die lokale Stabilitäts- und Dämpfungserhaltung.

Dies lässt sich als Steigungsbedingung für die Funktionen in $\tilde{R}(x)$ interpretieren. Die Gestalt der Vorsteuerung bestimmt daher zur lokalen Stabilitäts- und Dämpfungserhaltung maßgeblich die Form der Matrixfunktion $\tilde{R}(x)$.

Globale Optimalitätserhaltung: Unter der Annahme eines existierenden Reglergesetzes aus Gleichung (3) kann angegeben werden, inwiefern dieses global dem Gütekriterium $J = \frac{1}{2} \Delta u^T R \Delta u + \frac{1}{2} \Delta x^T Q \Delta x \rightarrow \textbf{min}$ genügt. Hierzu wird klassischerweise die Hamilton-Funktion des nicht geregelten Systems aus Gleichung (0) betrachtet:

$$H = -\frac{1}{2} x^T Q x - \frac{1}{2} u^T R u + \Psi^T f(x, u)$$

Hierbei stellt $\Psi^T$ den Vektor der Lagrange-Multiplikatoren dar, die zusammen mit dem Zustandsvektor x das sogenannte adjungierte System bilden.

Für die optimale Steuerung bleibt die Hamilton-Funktion konstant:

$$\frac{\partial H}{\partial u} = 0 = -R \cdot u + \Psi^T \frac{\partial f}{\partial u} \qquad (6)$$

Hieraus folgt für die optimale Steuerung:

$$u = R^{-1} \frac{\partial f}{\partial u}^T \cdot \Psi \qquad (7)$$

Der Verlauf der Lagrange-Multiplikatoren ergibt sich aus der Bedingung:

$$\dot{\Psi} = -\frac{\partial H}{\partial x} = -Q x + \Psi^T \cdot \frac{\partial f}{\partial x} \qquad (8)$$

Mit der Nebenbedingung des Verlaufs von x, der durch die Systemdynamik selbst gegeben ist:

$$\dot{x} = \frac{\partial H}{\partial \Psi} = f(x, u) \qquad (9)$$

Des Weiteren wird der in der Literatur übliche Ansatz $\Psi = -P \cdot x$ verwendet, um Existenzbedingungen des optimalen Stellgrößenverlaufs aufzustellen. $P$ sei konstant.

Mit dem Ansatz folgt für die optimale Stellgröße:

$$u = -R^{-1}\frac{\partial f^T}{\partial u} \cdot P \cdot x$$

Für die Lagrange-Multiplikatoren gilt:

$$\dot{\Psi} = -Qx + \Psi^T \cdot \frac{\partial f}{\partial x} = -Qx + \frac{\partial f^T}{\partial x} \cdot \Psi = -\left(\frac{\partial f^T}{\partial x} \cdot P + Q\right)x$$

Gleichzeitig kann man durch den oben genannten Ansatz für die Lagrange-Multiplikatoren schreiben:

$$\dot{\Psi} = -P \cdot \dot{x} = -P \cdot f(x, u)$$

Gleichsetzen liefert die Bedingung

$$P \cdot f(x, u) = \left(\frac{\partial f^T}{\partial x} \cdot P + Q\right)x$$

Unter Annahme des Reglergesetzes aus Gleichung (3) lässt sich als Bedingung für die Optimalitätserhaltung formulieren:

$$u = -R^{-1}\frac{\partial f^T}{\partial u} \cdot P \cdot x = u_{AP}(x) + \tilde{R}(x) \cdot (f_{AP}(x) - x) \qquad \text{[Optimalitätsbedingung 1]}$$

Sofern eine Matrix P existiert, sodass

$$P \cdot f\left(x, -R^{-1}\frac{\partial f^T}{\partial u} \cdot P \cdot x\right) - \left(\frac{\partial f^T}{\partial x} \cdot P + Q\right)x = 0 \ \forall x \qquad \text{[Optimalitätsbedingung 2]}$$

Nun wird die Anwendung der Bedingungen beschrieben. Bei der Suche nach der Funktion $\tilde{R}(x)$ kann nun ausgehend von den lokalen Reglermatrizen $\tilde{R}_{AP}$ als Startwerte eine Optimierung der interpolierten Funktion $\tilde{R}(x)$ vorgenommen werden. Hierbei werden die formulierten Bedingungen zur lokalen Stabilitäts- und Dämpfungserhaltung, sowie die Optimalitätsbedingungen ausgewertet und eine neue Position der Stützstellen in $\tilde{R}(x)$ gefunden. Diese Optimierung lässt sich mit Gauss-Prozessen aufgrund der einfachen Rechenbarkeit der Steigungsfunktion mit deutlich verringerter Rechenlast durchführen.

Interessant ist dies besonders für Systeme, bei denen klassischerweise eine Vorsteuerung bereits existiert und man die Vermutung hat, dass die Parametrierung der Reglermatrix $\tilde{R}(x)$ über einer Untermenge des Zustandsvektors möglich ist.

Die notwendige Anzahl an Zustandsvariablen ist äquivalent zur Anzahl der Stellgrößen u, damit die Betriebsbereiche eindeutig identifiziert werden können. Eine erste Einschätzung für die Wahl der jeweiligen Zustandsvariablen gibt die Korrelation der lokal linearen Reglerparameter p aus $\tilde{R}_{AP}$ mit den jeweiligen Zustandsgrößen.

Erfahrungsgemäß sollte bei der Wahl einer Zustandsgröße diejenige gewählt werden, für die sich jeweils einen möglichst monotonen und stetigen Verlauf bezüglich des Reglerparameters p zeigt.

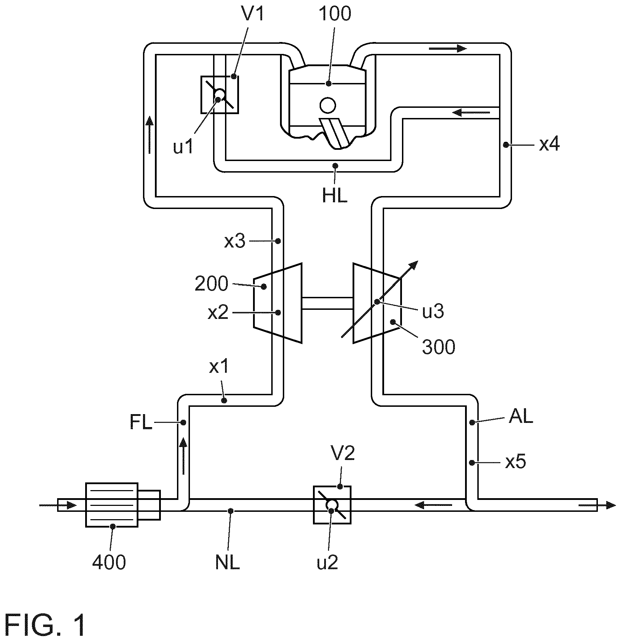

Als technisches Beispiel wird zur Anwendung des Verfahrens gemäß dem Schema in Figur 1 eine Ladedruckregelung eines Turboladers 200 (Verdichter) und gleichzeitiger Regelung einer Abgasrückführungsrate, insbesondere einer Hochdruck-Abgasrückführungs-Regelung (Hochdruck-AGR) und oder Niederdruck-Abgasrückführungs-Regelung (Niederdruck-AGR) einer Verbrennungskraftmaschine 100, insbesondere eines Dieselmotors betrachtet und erläutert, wobei es sich bei dem technischen Beispiel bevorzugt um einen Turbolader 200 handelt, der mit einer Turbine 300 mit variabler Turbinengeometrie in Verbindung steht. Ein solcher Turbolader 200 wird auch als Turbolader mit variabler Turbinengeometrie (VariableTurbinenGeometrie) VTG-Lader bezeichnet.

Der Turbolader 200 weist turbinenseitig ein Turbinenrad und verdichterseitig ein Verdichterrad auf, die auf einer Welle miteinander verbunden sind.

Der Unterschied zum herkömmlichen Turbolader besteht darin, dass der VTG-Lader auf der Eingangsseite der Turbine 300 verstellbare Leitschaufeln besitzt. Die Verstellung bewirkt, dass das Turbinenrad immer optimal durch das Abgas angeströmt wird, auch wenn unterschiedliche Abgasmengen zu Verfügung stehen beziehungsweise die Turbine 300 durchströmen. Bei kleiner Abgasmenge werden die Leitschaufeln auf flach gestellt, das heißt die Verstellposition der Leitschaufeln als Stellgröße u3 verändert sich, und es ergibt sich für die Abgase der Verbrennungskraftmaschine 100 ein geringerer Querschnitt in den Schaufeln.

Damit in derselben Zeiteinheit, eine gleiche Abgasmenge durch die Leitschaufeln strömen kann, muss die geringe Abgasmenge schneller strömen. Das führt zur schnelleren Anströmung und damit schnelleren Drehung des Turbinenrads, wodurch auf der Verdichterseite mehr Medium gefördert und ein höherer Ladedruck erreicht wird. Das geschieht also beispielsweise bei niedrigen Drehzahlen und Volllast, wenn ein schneller 'Ladedruckaufbau' (= Steigerung des Ladedrucks) benötigt wird. Mit zunehmender Abgasmenge werden die Leitschaufeln steiler gestellt, so dass sich wiederum die Verstellposition der Leitschaufeln als Stellgröße u3 verändert. Der Querschnitt vergrößert sich, die Anströmung des Turbinenrades bleibt aber optimal und der Ladedruck x3, sowie die Turbinenleistung bleiben annähernd konstant.

Das gewählte technische Ausführungsbeispiel betrifft einen Dieselmotor, da die Verwendung von VTG-Ladern ein im Dieselbereich oft verwendete Technologie darstellt. Es wird jedoch darauf hingewiesen, dass die technische Lösung auch für einen Ottomotor angewendet werden kann. Mit anderen Worten die erfindungsgemäße Lösung wird für Otto-Fahrzeuge und Diesel-Fahrzeug gleichermaßen beansprucht.

Das Ausführungsbeispiel betrifft somit die Ladedruckregelung eines VTG-Laders 200, 300 und gleichzeitiger Regelung mindestens einer Abgasrückführungsrate, insbesondere einer Abgasrückführungsrate über eine Hochdruckabgasrückführungs-Leitung mittels einer Hochdruck-AGR-Regelung und/oder einer Abgasrückführungsrate über eine Niederdruckabgasrückführungs-Leitung NL mittels einer Niederdruck-Abgasrückführungs-Regelung bei einem Otto-Motor oder einem Diesel-Motor.

Die Regelungsaufgabe wird hierbei als Mehrgrößenregelung aufgefasst, die mit dem erfindungsgemäßen Verfahren besonders vorteilhaft gelöst werden kann.

Für diese wird ein Zustandsraummodell gemäß Gleichung (0) entworfen mit den Zustandsgrößen x, wobei mehrere Zustandsgrößen berücksichtigt werden.

Nachfolgend werden einige Zustandsgrößen x1 bis x5 genannt, die in bevorzugter Ausgestaltung der Erfindung bei der genannten Anwendung berücksichtigt werden. Es versteht sich, dass darüber hinaus noch weitere hier nicht genannte Zustandsgrößen berücksichtigt werden können.

Beispielsweise werden die Zustandsgröße/n x1 bis x5 dem Regler 14 zugeführt und wirken auf die Regelstrecke (12).

Eine Zustandsgröße (vgl. Figur 1) ist ein Druck x1 vor einem Turbolader 200 zur Ladedruckregelung und zur Niederdruck-AGR-Regelung, der in einer Frischluftleitung FL gemessen wird. In der Frischluftleitung FL ist (vgl. Figur 1) üblicherweise ein Luftfilter 400 angeordnet.

Eine weitere Zustandsgröße (vgl. Figur 1), die dem Regler 14 zugeführt wird, ist eine Turboladerdrehzahl x2 des Turboladers 200, die zur Ladedruckregelung dient und ebenfalls in der Frischluftleitung FL gemessen wird.

Des Weiteren wird (vgl. Figur 1) zur Ladedruckregelung und zur Hochdruck-Abgasrückführungs-Regelung ein Druck x3 nach dem Turbolader 200 ermittelt und dem Regler 14 zugeführt.

Es versteht sich, dass die Zustandsgrößen x1, x2, x3 bei einer Niederdruck-Abgasrückführung über die Abgasrückführungsleitung NL (vgl. Figur 1) in Abhängigkeit eines Frischluft/Abgasgemisches ermittelt werden. Bei Systemen ohne Niederdruck-Abgasrückführung werden die Zustandsgrößen x1, x2, x3 der Frischluft ermittelt.

Außerdem ist vorgesehen, dass zur Ladedruckregelung und Hochdruck-Abgasrückführungs-Regelung ein Druck x4 des Abgases der Verbrennungskraftmaschine 100 vor der Turbine 300 mit variabler Turbinengeometrie in der Abgasleitung AL berücksichtigt und dem Regler 14 zugeführt wird.

Schließlich wird zur Ladedruckregelung und zur Niederdruck-AGR-Regelung ein Druck x5 nach der Turbine 300 mit variabler Turbinengeometrie in der Abgasleitung AL ermittelt, dem Regler 14 zugeführt, der somit bei der Ladedruckregelung und der Niederdruck-AGR-Regelung berücksichtigt wird.

Erfindungsgemäß werden, je nachdem ob eine Hochdruck-AGR-Regelung und/oder eine Niederdruck-AGR-Regelung berücksichtigt werden soll, Stellgrößen u gemessen und berücksichtigt, wobei bevorzugt mehrere Stellgrößen u1, u2, u3 berücksichtigt werden, die dem Regler 14 zurückgeführt werden und auf die Regelstrecke 12 wirken.

Es wird zur Regelung der Abgasrückführungsrate (vgl. Figur 1), wenn eine Hochdruck-Abgasrückführung vorgesehen ist, eine Ventilposition u1 eines Ventils V1 in der Abgas-Rückführungsleitung HL der Hochdruck-Abgasrückführung als Stellgröße u einbezogen. Die Entnahme des Abgases bei der Hochdruck-AGR erfolgt vor der Turbine 300 des Turboladers 200 und über die Abgas-Rückführungsleitung HL wird das Abgas nach einem Ladeluftkühler (nicht dargestellt) in die Frischluftleitung FL eingeleitet.

Ferner wird zur Regelung der Abgasrückführungsrate, insofern eine Niederdruck-AGR vorgesehen ist, eine Ventilposition u2 eines Ventils V2 in der Abgas-Rückführungsleitung NL der Niederdruck Abgasrückführung (vgl. Figur 1) als Stellgröße u ermittelt und dem Regler 14 zugeführt. Die Entnahme des Abgases bei der Niederdruck-AGR erfolgt nach der Abgasbehandlung und über die Abgas-Rückführungsleitung NL wird das Abgas vor dem Turbolader 200 in die Frischluftleitung FL eingeleitet.

Schließlich wird als Stellgröße u zur Ladedruckregelung, die bereits erläuterte Verstellposition u3 der Turbine 300 mit variabler Turbinengeometrie berücksichtigt, wobei die Verstellposition u3 in der genannten Ausgestaltung über die Erfassung der Positionierung der Leitschaufeln der Turbine 300 erfolgt.

Als Vorsteuerung wird bevorzugt die stationäre Leistungsbilanz des Turboladers 200, 300 mit einem eigens formulierten Kennfeld für die VTG-Position der Turbine 300 aus Druckverhältnis und dem Turbinenmassenstrom sowie das inverse Modell des Soll-Hochdruck/Niederdruck-AGR-Massenstroms gewählt.

Für das Design der Funktionen $\tilde{R}(x)$ wurden die Turboladerdrehzahl x2 und die Ist-AGR-Ventilposition(en) u1, u2 als gute Zustandsgrößen x beziehungsweise Stellgrößen u zum Scheduling der Reglerparameter p ermittelt, die gleichzeitig die Bedingungen der lokalen Stabilitäts- und Dämpfungserhaltung und der globalen Optimalität nach eigener Optimierung der Kennfeldverläufe der Reglerparameter p in $\tilde{R}(x)$ erfüllen.

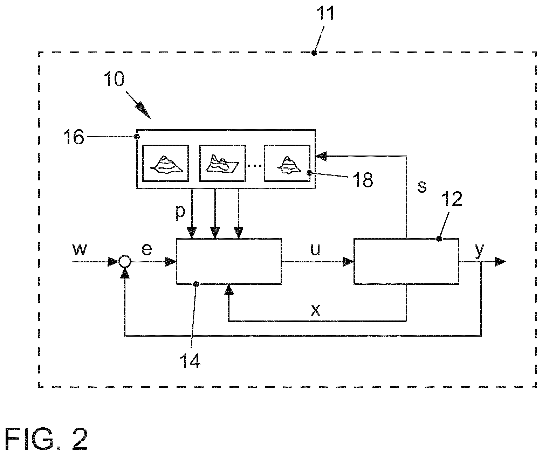

Figur 2 zeigt in eine beispielhafte Darstellung eines Regelkreises 10 mit einer Regelstrecke 12, die den Ausgangspunkt der Erfindung darstellt.

Ein Regler 14 des Regelkreises 10 kann in einem Steuergerät 11 ausgeführt sein oder werden.

Weiterhin können ein Gain-Scheduling und eine Vorsteuerung in dem Steuergerät 11 realisiert sein.

Das Steuergerät 11 kann zum Beispiel für ein Kraftfahrzeug, beispielsweise ein Motorsteuergerät eines als Verbrennungskraftmaschine 100 vorgesehenen Diesel-Motors vorgesehen sein.

Das Steuergerät 11 regelt die Regelstrecke 12, die beispielsweise eine Ladedruckregelung und eine gleichzeitige Hochdruck-AGR-Regelung und optional wie erläutert eine Niederdruck-AGR-Regelung umfasst. In einigen Anwendungsfällen ist eine Ladedruckregelung ausschließlich mit einer gleichzeitige Niederdruck-AGR-Regelung verknüpft. Es wird deutlich, dass das Verfahren variabel für alle Anwendungsfälle einsetzbar ist.

Das Steuergerät 11 umfasst, die vorhergehenden Ausführungen zusammengefasst den Regler 14, dem die jeweiligen Stellgrößen u (u1, u2, u3) zugeführt werden, die auf die Regelstrecke 12 wirken.

Zustandsgrößen x (x1, x2, x3, x4, x5), die gemessen oder geschätzt werden, werden unter Zusammenfassung der vorhergehenden Ausführungen ebenfalls dem Regler 14 zurückgeführt und wirken auf die Regelstrecke 12.

Regelgrößen y werden aus der Regelstrecke 12 ausgegeben und im Regelkreis zurückgeführt.

Die Regelgrößen y werden von Sollgrößen oder Führungsgrößen w subtrahiert, wodurch sich die Regelabweichung e ergibt, welche dem Regler 14 zugeführt wird.

Ein Reglerparameter-Generator 16 erzeugt Reglerparameter p für den Regler 14.

Aus der Regelstrecke 12 werden Größen der Regelstrecke 12 beziehungsweise Scheduling-Größen s dem Reglerparameter-Generator 16 zugeführt.

Der Reglerparameter-Generator 16 umfasst mehrere Gauß-Prozess-Modelle 18 zur Bestimmung der Reglerparameter p in Abhängigkeit der Größen s der Regelstrecke 12. Der Regler 14 ist als Mehrgrößenregler ausgeführt. Entsprechend ist für jede Größe ein Reglerparameter p, ein Gauß-Prozess-Modell 18 sowie eine Scheduling-Größe s vorgesehen.

Der Reglerparameter-Generator 16 bestimmt bevorzugt online, das heißt während des Betriebs der Regelstrecke 12, in jedem Rechenschritt die Reglerparameter p in Abhängigkeit von den zugeführten Scheduling-Größen s, wobei die Reglerparameter P die Ausgänge der Gauß-Prozess-Modelle 18 sind.

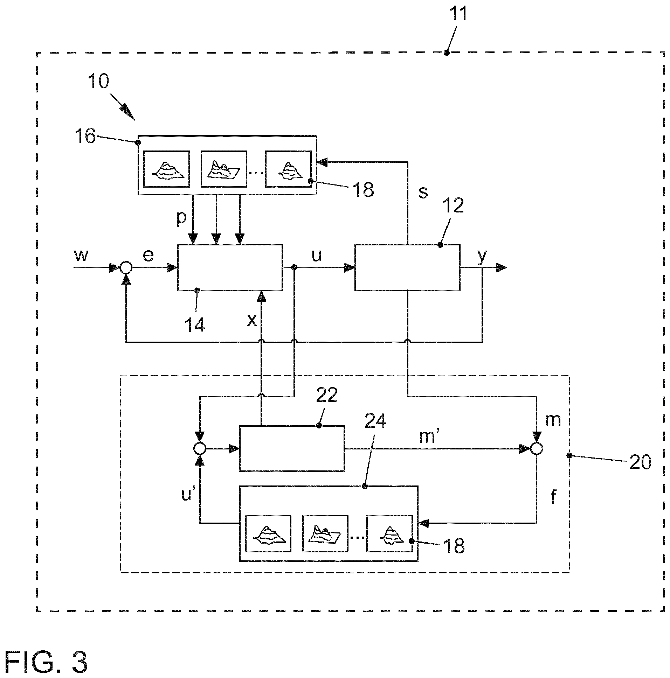

Figur 3 zeigt den erfindungsgemäßen Regelkreis 10 innerhalb des Steuergeräts 11 in einem ersten Ausführungsbeispiel. Der Regelkreis 10 basiert auf dem Regelkreis in Figur 2.

Zusätzlich enthält das Steuergerät 11 gemäß Figur 3 erfindungsgemäß einen Beobachter 20 zur Schätzung der Zustandsgrößen x (x1, x2, x3, x4, x5) der Regelstrecke 12. Der Beobachter 20 enthält ein Modell 22 der Regelstrecke. Das Modell 22 gibt zum einen die Zustandsgrößen x (x1, x2, x3, x4, x5) an den Regler 14 aus und zum anderen modellierte Messgrößen m'.

In einem Knoten, wie zum Beispiel einem Addierer, werden verfügbare Messgrößen m der Regelstrecke 12 von den modellierten Messgrößen m' des Modells 22 subtrahiert. Das Ergebnis ist ein Messfehler oder Fehlersignal f, welches erfindungsgemäß einem Schätzverstärker 24 zugeführt wird.

Der Schätzverstärker 24 enthält, wie Figur 3 verdeutlicht, analog zu dem Reglerparameter-Generator 16 mehrere Gauß-Prozess-Modelle 18, welche erfindungsgemäß Verstärkungsfaktoren beziehungsweise Stellgrößen u' des Beobachters 20 erzeugen.

Es wird erfindungsgemäß die vollständige Rückführung der Zustandsgrößen x (x1, x2, x3, x4, x5) der Regelstrecke 12 durch den Beobachter 20 realisiert.

Dazu werden die Verstärkungsfaktoren, die zur Konvergenz eines Schätzfehlers über die Generierung eines zusätzlichen Stellanteils u' in der Beobachterstruktur des Beobachters 20 führen, als Gauß-Prozessor modelliert.

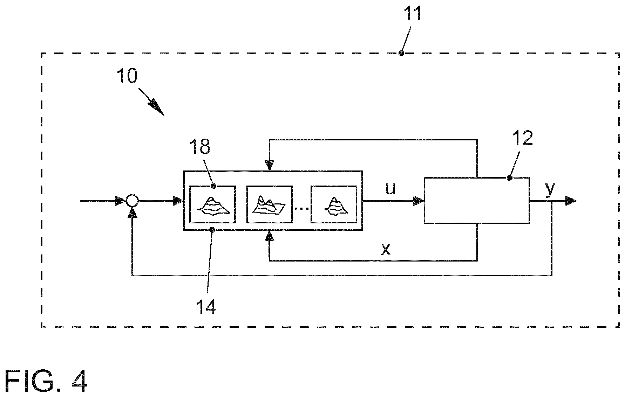

In Figur 4 ist ein weiterer Regelkreis 10 dargestellt. Bei diesem zweiten Ausführungsbeispiel sind einer oder mehrere Modellanteile des Reglers 14 als Gauß-Prozess-Modell 18 ausgeführt. Das beschriebene Scheduling ist dann als Element oder Funktionsteil innerhalb des Reglers 14 realisiert. Das Scheduling und die eigentliche Reglerstruktur sind damit zusammengeführt. Als Modellanteile des Reglers 14 können Kanäle des Reglers angesehen werden, die zu einer oder mehreren Größen eines Mehrgrößenreglers korrespondieren.

Die Wahrscheinlichkeitswerte, die seitens der Gauss-Prozess-Modellierung 18 ermittelt werden, liefern eine Aussage über die Güte des ermittelten Parameterwertes, insbesondere des Reglerparameters p. Daher können diese Wahrscheinlichkeitswerte innerhalb der Reglerstruktur direkt verwendet werden, um bei geringer Modellierungsgüte ein konservativeres (stärker gedämpftes) Verhalten der geregelten Regelstrecke 12 zu erzeugen. Hierfür werden die ermittelten Reglerparameter p in Abhängigkeit der Wahrscheinlichkeitswerte in einer eigenen Funktionalität des Reglers 14 so variiert, dass die Dämpfung des nominellen geregelten Systems erhöht wird.

Bezugszeichenliste

| | |
|---|---|
| 100 | Verbrennungskraftmaschine |
| 200 | Turbolader (Verdichter) |
| 300 | Turbine mit variabler Turbinengeometrie |
| 400 | Luftfilter |
| V1 | Ventil in Hochdruck-Abgasrückführungsleitung HL |
| V2 | Ventil in Niederdruck-Abgasrückführungsleitung NL |
| HL | Abgas-Rückführungsleitung der Hochdruck-Abgasrückführung |
| NL | Abgas-Rückführungsleitung der Niederdruck-Abgasrückführung |
| FL | Frischluftleitung |
| AL | Abgasleitung |
| 10 | Regelkreis |
| 11 | Steuergerät |
| 12 | Regelstrecke |
| 14 | Regler |
| 16 | Reglerparameter-Generator |
| 18 | Gauß-Prozess-Modell |
| 20 | Beobachter |
| 22 | Modell |
| 24 | Schätzverstärker |
| e | Regelabweichung |
| f | Fehlersignal |
| m | Messgröße |
| m' | modellierte Messgröße |
| p | Reglerparameter |
| s | Scheduling-Größe |
| u | Stellgröße |
| u1 | Ventilposition des Ventils V1 |
| u2 | Ventilposition des Ventils V2 |
| u3 | Verstellposition der Turbine 300 |
| u' | Stellgröße Beobachter |
| w | Sollgröße |
| x | Zustandsgröße |
| x1 | Druck vor dem Turbolader 200 |
| x2 | Drehzahl des Turboladers 200 |
| x3 | Druck nach dem Turbolader 200 |
| x4 | Druck vor der Turbine 300 |
| x5 | Druck nach der Turbine 300 |
| y | Regelgröße |

**Patentansprüche**

1. Verfahren zur Ladedruckregelung eines Turboladers (200, 300) mit variabler Turbinengeometrie einer Verbrennungskraftmaschine (100), dessen Reglerparameter (p) beim Regeln einer Regelstrecke (12) mit einem Regler (14) in Abhängigkeit von Größen (s) der Regelstrecke (12) variieren,

**dadurch gekennzeichnet, dass**

• zur Bestimmung der Reglerparameter (p) in Abhängigkeit der Größen (s) der Regelstrecke (12) Gauss-Prozess-Modelle (18) in einer dafür eingerichteten Vorrichtung (16) zur Bestimmung der Reglerparameter (p) verwendet werden, wobei die bestimmten Reglerparameter (p) die Ausgänge der Gauß-Prozess-Modelle (18) sind,

• wobei in Abhängigkeit von auf die Regelstrecke (12) wirkenden Stellgrößen (u; u1, u2, u3) mittels eines Beobachters (20) in die Regelstrecke (12) einfließende Zustandsgrößen (x; x1, x2, x3, x4, x5) geschätzt oder gemessen werden, die zu dem Regler (14) zurückgeführt werden wobei der Beobachter (20) innerhalb eines Schätzverstärkers (24) ebenfalls über Gauss-Prozess-Modelle (18) Verstärkungsfaktoren modelliert,

• wobei der Beobachter (20) zur Schätzung der Zustandsgrößen (x; x1, x2, x3, x4, x5) der Regelstrecke (12) ein Modell (22) enthält, welches die Zustandsgrößen (x; x1, x2, x3, x4, x5) sowie modellierte Messgrößen (m') an den Regler (14) ausgibt, wobei verfügbare Messgrößen (m) der Regelstrecke (12) von den modellierten Messgrößen (m') des Modells (22) subtrahiert werden, wonach dem Schätzverstärker (24) im Ergebnis ein Messfehler oder ein Fehlersignal (f) zugeführt wird,

• wobei die mehreren Gauss-Prozess-Modelle (18) des Schätzverstärkers (24) Verstärkungsfaktoren und Stellgrößen (u') des Beobachters (20) erzeugen, so dass eine vollständige Rückführung der Zustandsgrößen (x; x1, x2, x3, x4, x5) der Regelstrecke (12) durch den Beobachter (20) durchgeführt wird,

• wobei die Verstärkungsfaktoren innerhalb des Schätzverstärkers (24) in der Struktur des Beobachters (20) zur Konvergenz eines Schätzfehlers über die Generierung eines zusätzlichen Stellanteils (u') führen.

2. Verfahren nach Anspruch 1,
   **dadurch gekennzeichnet, dass**
   die Ladedruckregelung des Turboladers (200, 300) mit variabler Turbinengeometrie gleichzeitig mit der Regelung mindestens einer Abgasrückführungsrate einer Abgasrückführung der Verbrennungskraftmaschine (100) vorgenommen wird, deren Reglerparameter (p) beim Regeln der Regelstrecke (12) mit dem Regler (14) in Abhängigkeit von Größen (s) der Regelstrecke (12) variieren.

3. Verfahren nach Anspruch 2,
   **dadurch gekennzeichnet, dass**
   die Ladedruckregelung des Turboladers (200, 300) mit variabler Turbinengeometrie gleichzeitig mit der Regelung mindestens einer Abgasrückführungsrate einer Hochdruck-Abgasrückführung und/oder Niederdruck-Abgasrückführung der Verbrennungskraftmaschine (100) vorgenommen wird, deren Reglerparameter (p) beim Regeln der Regelstrecke (12) mit dem Regler (14) in Abhängigkeit von Größen (s) der Regelstrecke (12) variieren.

4. Verfahren nach Anspruch 1,
   **dadurch gekennzeichnet, dass**
   dem Regler (14) zur Ladedruckregelung des Turboladers (200) Zustandsgrößen (x; x1, x2, x3, x4, x5) zugeführt werden, die auf die Regelstrecke (12) wirken, wobei

   • ein Druck (x1) vor dem Turbolader (200),
   • eine Turboladerdrehzahl (x2) des Turboladers (200),
   • ein Druck (x3) nach dem Turbolader (200),
   • ein Druck (x4) vor der Turbine (300) mit variabler Turbinengeometrie,
   • ein Druck (x5) nach der Turbine (300) mit variabler Turbinengeometrie verwendet werden.

5. Verfahren nach Anspruch 1 und 2,
   **dadurch gekennzeichnet, dass**
   dem Regler (14) zur Ladedruckregelung des Turboladers (200) und zur Regelung der Abgasrückführungsrate Zustandsgrößen (x; x1, x2, x3, x4, x5) zugeführt werden, die auf die Regelstrecke (12) wirken, wobei

   • ein Druck (x1) vor dem Turbolader (200) zur Ladedruckregelung und zur Niederdruck- Abgasrückführungs-Regelung,
   • zur Ladedruckregelung eine Turboladerdrehzahl (x2) des Turboladers (200),
   • zur Ladedruckregelung und Hochdruck-Abgasrückführungs-Regelung ein Druck (x3) nach dem Turbolader (200),
   • zur Ladedruckregelung und Hochdruck-Abgasrückführungs-Regelung ein Druck (x4) vor der Turbine (300) mit variabler Turbinengeometrie,
   • zur Ladedruckregelung und zur Niederdruck-Abgasrückführungs-Regelung ein Druck (x5) nach der Turbine

(300) mit variabler Turbinengeometrie

verwendet werden.

**6.** Verfahren nach Anspruch 1 oder 2,
**dadurch gekennzeichnet, dass**
zur Ladedruckregelung des Turboladers (200) als Stellgröße (u; u3), die dem Regler (14) zurückgeführt wird, die auf die Regelstrecke (12) wirkt,

    • eine Verstellposition (u3) der Turbine (300) mit variabler Turbinengeometrie verwendet wird.

**7.** Verfahren nach Anspruch 1 bis 3,
**dadurch gekennzeichnet, dass**
dem Regler (14) zur Regelung der Abgasrückführungsrate Stellgrößen (u; u1, u2) zurückgeführt werden, die auf die Regelstrecke (12) wirken, wobei

    • eine Ventilposition (u1) eines Ventils (V1) in einer Abgas-Rückführungsleitung (HL) der Hochdruck-Abgasrückführung und/oder
    • eine Ventilposition (u2) eines Ventils (V2) in der Abgas-Rückführungsleitung (NL) der Niederdruck-Abgasrückführung

verwendet wird.

**8.** Verfahren nach Anspruch 1 oder 2,
**dadurch gekennzeichnet, dass**
Regelgrößen (y) aus der Regelstrecke (12) ausgegeben und im Regelkreis zurückgeführt werden, wobei die Regelgrößen (y) von Sollgrößen oder Führungsgrößen (w) subtrahiert werden, wodurch sich eine Regelabweichung (e) ergibt, welche dem Regler (14) zugeführt wird.

**9.** Verfahren nach Anspruch 1 oder 2,
**dadurch gekennzeichnet, dass**
die Vorrichtung (16) Reglerparameter (p) für den Regler (14) bestimmt, wobei der Vorrichtung (16) aus der Regelstrecke (12) Regelgrößen (y) zugeführt werden, wobei mindestens eine der Größen der Regelstrecke (12) der Vorrichtung (16) als Scheduling-Größe (s) zugeführt wird.

**10.** Verfahren nach Anspruch 9, **dadurch gekennzeichnet, dass** die Vorrichtung (16) mehrere Gauss-Prozess-Modelle (18) zur Bestimmung der Reglerparameter (p) in Abhängigkeit der mindestens einen Scheduling-Größe (s) der Regelstrecke (12) umfasst, so dass mittels der mehreren Gauss-Prozess-Modelle (18) mehrdimensionale Zusammenhänge der Regelstrecke (12) modelliert werden.

**11.** Verfahren nach Anspruch 9 oder 10,
**dadurch gekennzeichnet, dass**
die Vorrichtung (16) während des Betriebs der Regelstrecke (12), in jedem Rechenschritt die Reglerparameter (p) in Abhängigkeit von der mindestens einen zugeführten Scheduling-Größe (s) online bestimmt.

**12.** Verfahren nach mindestens einem der Ansprüche 9 bis 11,
**dadurch gekennzeichnet, dass**
mindestens ein Modellanteil des Reglers (14) als Gauss-Prozess-Modell (18) ausgeführt ist, wobei das Scheduling nach mindestens einem der Ansprüche 9 bis 11 als Element oder Funktionsanteil innerhalb des Reglers (14) realisiert wird, so dass das Scheduling und die Reglerstruktur zusammengeführt sind, wobei der mindestens eine Modellanteil oder die mehreren Modellanteile des Reglers (14) Kanäle des Reglers (14) sind, die zu einer oder mehreren Größe/n eines Mehrgrößenreglers korrespondieren .

**13.** Verfahren nach Anspruch 1 oder 2,
**dadurch gekennzeichnet, dass**
über Modellierung der Gauss-Prozess-Modelle (18) Wahrscheinlichkeitswerte ermittelt werden, die eine Aussage über Güte der ermittelten Reglerparameter (p) liefern, wobei diese Wahrscheinlichkeitswerte innerhalb der Reglerstruktur direkt verwendet werden, um bei einer geringen Modellierungsgüte ein konservativeres, insbesondere stärker gedämpftes Verhalten der geregelten Regelstrecke (12) zu erzeugen, wozu die ermittelten Reglerparameter (p) in Abhängigkeit der Wahrscheinlichkeitswerte in einer eigenen Funktionalität des Reglers (14) variiert werden, so dass die Dämpfung des nominellen geregelten Systems erhöht wird.

14. Steuergerät zum Einsatz in einem Fahrzeug, eingerichtet zur Durchführung des Verfahren nach mindestens einem der Ansprüche 1 bis 13.


**Claims**

1. Method for controlling the charging pressure of a turbocharger (200, 300) with a variable turbine geometry of an internal combustion engine (100), the controller parameters (p) of which vary during the control of a controlled system (12) with a controller (14) as a function of variables (s) of the controlled system (12),
   **characterized in that**

   • in order to determine the controller parameters (p) as a function of the variables (s) of the controlled system (12) Gaussian process models (18) are used to determine the controller parameters (p) in a device (16) which is designed for the purpose, wherein the determined controller parameters (p) are the outputs of the Gaussian process models (18),
   • wherein status variables (x; x1, x2, x3, x4, x5) which are input into the controlled system (12) and which are fed back to the controller (14) are estimated or measured by means of an observer (20) as a function of manipulated variables (u; u1, u2, u3) which act on the controlled system (12), wherein the observer (20) also models gain factors by means of Gaussian process models (18) within an estimate amplifier (24),
   • wherein, for the estimation of the status variables (x; x1, x2, x3, x4, x5) of the controlled system (12), the observer (20) contains a model (22) which outputs the status variables (x; x1, x2, x3, x4, x5) and modelled measurement variables (m') to the controller (14), wherein available measurement variables (m) of the controlled system (12) are subtracted from the modelled measurement variables (m') of the model (22), after which as a result a measurement error or an error signal (f) is fed to the estimate amplifier (24),
   • wherein the plurality of Gaussian process models (18) of the estimate amplifier (24) generate gain factors and manipulated variables (u') of the observer (20), with the result that complete feedback of the status variables (x; x1, x2, x3, x4, x5) of the controlled system (12) is carried out by the observer (20),
   • wherein the gain factors bring about, within the estimate amplifier (24) in the structure of the observer (20), convergence of an estimate error by generating an additional actuation portion (u').

2. Method according to Claim 1,
   **characterized in that**
   the control of charging pressure of the turbocharger (200, 300) with a variable turbine geometry is carried out at the same time as the control of at least one exhaust gas recirculation rate of an exhaust recirculation system of the internal combustion engine (100), the controller parameters (p) of which vary during the control of the controlled system (12) with the controller (14) as a function of variables (s) of the controlled system (12).

3. Method according to Claim 2,
   **characterized in that**
   the control of the charging pressure of the turbocharger (200, 300) with a variable turbine geometry is carried out at the same time as the control of at least one exhaust gas recirculation rate of a high-pressure exhaust gas recirculation system and/or low-pressure exhaust gas recirculation system of the internal combustion engine (100), the controller parameters (p) of which vary during the control of the controlled system (12) with the controller (14) as a function of variables (s) of the controlled system (12).

4. Method according to Claim 1,
   **characterized in that**
   status variables (x; x1, x2, x3, x4, x5) are fed to the controller (14) for the control of the charging pressure of the turbocharger (200), which status variables (x; x1, x2, x3, x4, x5) act on the controlled system (12), wherein the following are used

   • a pressure (x1) upstream of the turbocharger (200,
   • a turbocharger rotational speed (x2) of the turbocharger (200),
   • a pressure (x3) downstream of the turbocharger (200),

• a pressure (x4) upstream of the turbine (300) with a variable turbine geometry,
• a pressure (x5) downstream of the turbine (300) with a variable turbine geometry.

**5.** Method according to Claims 1 and 2,
**characterized in that**
status variables (x; x1, x2, x3, x4, x5) which act on the controlled system (12) are fed to the controller (14) for the control of the charging pressure of the turbocharger (200) and for the control of the exhaust gas recirculation rate, wherein

• a pressure (x1) upstream of the turbocharger (200) is used for the control of the charging pressure and for the control of the low-pressure exhaust gas recirculation,
• a turbocharger rotational speed (x2) of the turbocharger (200) is used for the control of the charging pressure,
• a pressure (x3) downstream of the turbocharger (200) is used for the control of the charging pressure and control of the high-pressure exhaust gas recirculation,
• a pressure (x4) upstream of the turbine (300) with the variable turbine geometry is used for the control of the charging pressure and control of the high-pressure exhaust gas recirculation, and
• a pressure (x5) downstream of the turbine (300) with a variable turbine geometry is used for the control of the charging pressure and for the control of the low-pressure exhaust gas recirculation.

**6.** Method according to Claim 1 or 2,
**characterized in that** for the control of the charging pressure of the turbocharger (200),

• an adjustment position (u3) of the turbine (300) with a variable turbine geometry is used as a manipulated variable (u; u3) which is fed to the controller (14) and which acts on the controlled system (12).

**7.** Method according to Claims 1 to 3,
**characterized in that**
manipulated variables (u; u1, u2) which act on the controlled system (12) are fed to the controller (14) for controlling the exhaust gas recirculation rate, wherein

• a valve position (u1) of a valve (V1) is used in an exhaust gas recirculation line (HL) of the high-pressure exhaust gas recirculation, and/or
• a valve position (u2) of a valve (V2) is used in the exhaust gas recirculation line (NL) of the low-pressure exhaust gas recirculation.

**8.** Method according to Claim 1 or 2,
**characterized in that**
controlled variables (y) are output from the controlled system (12) and fed back in the control circuit, wherein the controlled variables (y) are subtracted from setpoint variables or guide variables (w), as a result of which a control error (e) is produced which is fed to the controller (14).

**9.** Method according to Claim 1 or 2,
**characterized in that**
the device (16) determines controller parameters (p) for the controller (14), wherein controlled variables (y) are fed to the device (16) from the controlled system (12), wherein at least one of the variables of the controlled system (12) is fed to the device (16) as a scheduling variable (s).

**10.** Method according to Claim 9, **characterized in that** the device (16) comprises a plurality of Gaussian process models (18) for determining the controller parameters (p) as a function of the at least one scheduling variable (s) of the controlled system (12), with the result that multi-dimensional relationships of the controlled system (12) are modelled by means of the plurality of Gaussian process models (18).

**11.** Method according to Claim 9 or 10, **characterized in that**
during the operation of the controlled system (12) the device (16) determines the controller parameters (p) on line in each computing step as a function of the at least one fed-in scheduling variable (s).

**12.** Method according to at least one of Claims 9 to 11,
**characterized in that**

at least one model component of the controller (14) is embodied as a Gaussian process model (18), wherein the scheduling according to at least one of Claims 9 to 11 is implemented as an element or function component within the controller (14), with the result that the scheduling and the controller structure are combined, wherein the at least one model component or the plurality of model components of the controller (14) are channels of the controller (14) which correspond to one or more variables of a multi-variable controller.

13. Method according to Claim 1 or 2,
**characterized in that**
by means of modelling of the Gaussian process models (18) probability values are determined which supply definitive information about the quality of the determined controller parameters (p), wherein these probability values are used directly within the controller structure to generate a more conservative, in particular more strongly damped behaviour of the controlled system (12) when there is a low modelling quality, for which purpose the determined controller parameters (p) are varied as a function of the probability values in a separate functionality of the controller (14), with the result that the damping of the nominal controlled system is increased.

14. Control device for use in a vehicle, configured to carry out the method according to at least one of Claims 1 to 13.

## Revendications

1. Procédé de régulation de pression d'admission d'un turbocompresseur (200, 300) à géométrie de turbine variable d'un moteur à combustion interne (100), les paramètres de régulation (p) variant, lors de la régulation d'une section de régulation (12), au moyen d'un régulateur (14) en fonction de grandeurs (s) de la section de régulation (12),
**caractérisé en ce que**

• pour déterminer les paramètres de régulation (p) en fonction des grandeurs (s) de la section de régulation (12), des modèles de processus gaussiens (18) d'un dispositif adapté (16) peuvent être utilisés pour déterminer les paramètres de régulation (p), les paramètres de régulation (p) déterminés étant les sorties des modèles de processus gaussiens (18),
• des grandeurs d'état (x ; x1, x2, x3, x4, x5) introduites dans la section de régulation (12) étant évaluées ou mesurées par un observateur (20) en fonction de grandeurs de commande (u ; u1, u2, u3) agissant sur la section de régulation (12), lesquelles grandeurs d'état sont renvoyées au régulateur (14), l'observateur (20) modélisant des facteurs d'amplification dans un amplificateur d'évaluation (24) également par le biais de modèles de processus gaussiens (18),
• l'observateur (20) contenant un modèle (22) destiné à évaluer les grandeurs d'état (x ; x1, x2, x3, x4, x5) de la section de régulation (12), lequel modèle délivre les grandeurs d'état (x ; x1, x2, x3, x4, x5) et les grandeurs mesurées modélisées (m') au régulateur (14), des grandeurs mesurées disponibles (m) de la section de régulation (12) étant soustraites des grandeurs mesurées (m') du modèle (22), après quoi une erreur de mesure ou un signal d'erreur (f) est amené comme résultat à l'amplificateur d'évaluation (24),
• la pluralité de modèles de processus gaussiens (18) de l'amplificateur d'évaluation (24) générant des facteurs d'amplification et des grandeurs de commande (u') de l'observateur (20) de telle sorte qu'une rétroaction complète des grandeurs d'état (x ; x1, x2, x3, x4, x5) de la section de régulation (12) est effectuée par l'observateur (20),
• les facteurs d'amplification qui se trouvent dans l'amplificateur d'évaluation (24) de la structure de l'observateur (20) conduisant à la convergence d'une erreur d'évaluation lors de la génération d'une composante de commande supplémentaire (u').

2. Procédé selon la revendication 1,
**caractérisé en ce que**
la régulation de pression d'admission du turbocompresseur (200, 300) à géométrie de turbine variable est effectuée simultanément à la régulation d'au moins un taux de recirculation de gaz d'échappement d'un système de recirculation de gaz d'échappement du moteur à combustion interne (100), les paramètres de régulation (p) variant, lors de la régulation de la section de régulation (12), au moyen du régulateur (14) en fonction de grandeurs (s) de la section de régulation (12).

3. Procédé selon la revendication 2,
**caractérisé en ce que**
la régulation de pression d'admission du turbocompresseur (200, 300) à géométrie de turbine variable est effectuée simultanément à la régulation d'au moins un taux de recirculation de gaz d'échappement d'un système de recirculation de gaz d'échappement à haute pression et/ou d'un système de recirculation de gaz d'échappement à basse pression du moteur à combustion interne (100), les paramètres de régulation (p) variant, lors de la régulation de la section de régulation (12), au moyen du régulateur (14) en fonction de grandeurs (s) de la section de régulation (12).

**4.** Procédé selon la revendication 1,
**caractérisé en ce que**

   • des grandeurs d'état (x ; x1, x2, x3, x4, x5), agissant sur le système de régulation (12), sont amenées au régulateur (14) pour réguler la pression d'admission du turbocompresseur (200), avec utilisation
   • d'une pression (x1) en amont du turbocompresseur (200),
   • d'une vitesse de rotation (x2) du turbocompresseur (200),
   • d'une pression (x3) en aval du turbocompresseur (200),
   • d'une pression (x4) en amont de la turbine (300) à géométrie variable,
   • d'une pression (x5) en aval de la turbine (300) à géométrie variable.

**5.** Procédé selon les revendications 1 et 2,
**caractérisé en ce que**
des grandeurs d'état (x ; x1, x2, x3, x4, x5), agissant sur le système de régulation (12), sont amenées au régulateur (14) pour réguler la pression d'admission du turbocompresseur (200), avec utilisation

   • d'une pression (x1) en amont du turbocompresseur (200) pour réguler la pression d'admission et réguler la recirculation de gaz d'échappement à basse pression,
   • d'une vitesse de rotation (x2) du turbocompresseur (200) pour réguler la pression d'admission,,
   • d'une pression (x3) en aval du turbocompresseur (200) pour réguler la pression d'admission et réguler la recirculation de gaz d'échappement à haute pression,
   • d'une pression (x4) en amont de la turbine (300) à géométrie variable pour réguler la pression d'admission et réguler la recirculation de gaz d'échappement à haute pression,
   • d'une pression (x5) en aval de la turbine (300) à géométrie variable pour réguler la pression d'admission et réguler la recirculation de gaz d'échappement à basse pression.

**6.** Procédé selon la revendication 1 ou 2,
**caractérisé en ce que**

   • une position de réglage (u3) de la turbine (300) à géométrie variable est utilisée comme grandeur de commande (u ; u3), qui est renvoyée au régulateur (14) et qui agit sur la section de commande (12), pour réguler la pression d'admission du turbocompresseur (200) .

**7.** Procédé selon la revendication 1 à 3,
**caractérisé en ce que**
des grandeurs de commande (u ; u1, u2), agissant sur la section de régulation (12), sont renvoyées au régulateur (14) pour réguler le taux de recirculation de gaz d'échappement, avec utilisation

   • d'une position (u1) d'une soupape (V1) dans un conduit de recirculation de gaz d'échappement (HL) du système de recirculation de gaz d'échappement à haute pression et/ou
   • d'une position (u2) d'une soupape (V2) dans le conduit de recirculation de gaz d'échappement (NL) du système de recirculation de gaz d'échappement à basse pression.

**8.** Procédé selon la revendication 1 ou 2,
**caractérisé en ce que**
des grandeurs de régulation (y) sont délivrées en sortie de la section de régulation (12) et sont renvoyées dans la boucle de régulation, les grandeurs de régulation (y) étant soustraites de grandeurs de consigne ou de grandeurs de référence (w) de manière à obtenir une déviation de régulation (e) qui est amenée au régulateur (14).

**9.** Procédé selon la revendication 1 ou 2,
**caractérisé en ce que**
le dispositif (16) détermine des paramètres (p) destinés au régulateur (14), des grandeurs de régulation (y) étant amenées du système de régulation (12) au dispositif (16), au moins une des grandeurs de la section de régulation (12) étant amenée au dispositif (16) en tant que grandeur de planification (s) .

10. Procédé selon la revendication 9, **caractérisé en ce que** le dispositif (16) comprend une pluralité de modèles de processus gaussiens (18) destinés à déterminer les paramètres de régulation (p) en fonction de l'au moins une grandeur de planification (s) de la section de régulation (12) de sorte que des corrélations multidimensionnelles de la section de régulation (12) soient modélisées au moyen de la pluralité de modèles de processus gaussiens (18).

11. Procédé selon la revendication 9 ou 10,
**caractérisé en ce que**
le dispositif (16) détermine en ligne, pendant le fonctionnement de la section de régulation (12), à chaque étape de calcul, les paramètres de régulation (p) en fonction de l'au moins une grandeur de planification (s) fournie.

12. Procédé selon l'une au moins des revendications 9 à 11,
**caractérisé en ce que**
au moins une composante de modèle du régulateur (14) est conçue comme un modèle de processus gaussien (18), la planification selon l'une au moins des revendications 9 à 11 étant réalisée en tant qu'élément ou composante fonctionnelle dans le régulateur (14) de manière à fusionner la planification et la structure de régulation, l'au moins une composante de modèle ou la pluralité de composantes de modèle du régulateur (14) étant des canaux du régulateur (14) qui correspondent à au moins une grandeur d'un régulateur à grandeurs multiples.

13. Procédé selon la revendication 1 ou 2,
**caractérisé en ce que**
des valeurs de probabilité étant déterminées par modélisation des modèles de processus gaussiens (18), lesquelles valeurs de probabilité fournissent des informations sur la qualité des paramètres de régulation (p) déterminés, ces valeurs de probabilité étant utilisées directement dans la structure de régulation pour générer un comportement de la section de régulation (12) régulée qui est plus conservatif, notamment plus fortement atténué, avec une faible qualité de modélisation, ce pour quoi les paramètres de régulation (p) déterminés sont modifiés en fonction des valeurs de probabilité dans une fonctionnalité propre du régulateur (14) de manière à augmenter l'atténuation du système régulé nominal.

14. Dispositif de commande destiné à être utilisé dans un véhicule et conçu pour mettre en oeuvre le procédé selon l'une au moins des revendications 1 à 13.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2010028266 A1
- US 20070276512 A1
- US 20050193739 A1
- DE 10238573 A1
- EP 1426594 A2
- DE 112007000998 T5
- DE 102008001081 A1
- DE 102010028266 A1
- DE 102008043315 A1

**In der Beschreibung aufgeführte Nicht-Patentliteratur**

- **K. AZMAN et al.** Fixed-structure Gaussian process model. *International Journal of Systems Science,* 01. Dezember 2009, vol. 40 (12), 1253-1262